# FASCICULE DE BREVET EUROPEEN

(11) **EP 0 356 349 B1**
(45) Date de publication et mention de la délivrance du brevet: **27.10.1993**
(21) Numéro de dépôt: 89420298.5
(22) Date de dépôt: 09.08.1989
(51) Int. Cl.: G02B 27/14, G01J 3/42

(54) **Dispositif pour séparer un faisceau de lumière blanche en une pluralité de faisceaux élémentaires de couleur déterminée**
Vorrichtung zum Aufteilen eines weissen Lichtstrahls in mehrere Elementarstrahlen mit vorbestimmten Farben
Device for separating a white-light beam into a plurality of elementary beams with predetermined colours

(30) Priorité: 18.08.1988 FR 8811138
(43) Date de publication de la demande: 28.02.1990
(73) Titulaire: KIS PHOTO INDUSTRIE S.a.r.l., 38100 Grenoble (FR)
(72) Inventeur: Gerstch, Franck, F-38240 Meylan (FR)
(74) Mandataire: Laurent, Michel

(56) Documents cités:
- GB-A- 2 153 546
- US-A- 3 905 684
- US-A- 4 529 308
- PATENT ABSTRACTS OF JAPAN, vol. 9, no. 127 (P-360)[1850], 31 mai 1985, page 43 P 360; & JP-A-60 10 223
- PATENT ABSTRACTS OF JAPAN, vol. 12, no. 4 (M-657)[2851], 8 janvier 1988, page 120 M 657; & JP-A-62 169 652

## Description

L'invention concerne un dispositif pour séparer un faisceau de lumière blanche en une pluralité de faisceaux élémentaires de couleur déterminée ; elle se rapporte plus particulièrement à un dispositif du type en question pour le tirage et développement d'épreuves photographiques et plus particulièrement pour, au moyen d'une source unique de lumière, alimenter d'une part le densitomètre et d'autre part, l'ensemble d'analyse couleur, voire d'analyse de contraste.

En d'autres termes, l'invention consiste à séparer un faisceau de lumière blanche mélangé en une série de faisceaux élémentaires de tranches de longueur d'ondes déterminées dans le but d'analyser cette lumière blanche dans ces différents composants.

Dans la demande de brevet français 87.14 229 déposé par le Demandeur le 9 Octobre 1987, on a proposé un dispositif du type en question faisant appel à une pluralité de fibres optiques et à un système de balayage. Cette solution reste complexe sur le plan mécanique, permet difficilement d'obtenir une acquisition homogène de la zone à lire, ce qui se traduit par une hétérogénéité dans la mesure et enfin affaiblit le signal transmis.

La demande GB-A-2 153 546 divulgue un démultiplexeur optique dans lequel des filtres holographiques parallèles entre eux et inclines sur l'axe optique d'un faisceau incident permettent de réfléchir chacun une longueur d'onde de ce faisceau.

Dans le brevet japonais JP - A - 60 10 223, on a décrit un dispositif de séparation d'un faisceau de lumière blanche en trois composantes, également de lumière blanche. Ces trois composantes sont converties en signaux électriques au moyen de capteurs photosensibles, après avoir traversé des filtres de couleur, respectivement bleu, vert et rouge, et ce en vue d'une analyse en résolution chromatique. Il s'avère que l'utilisation d'un tel dispositif ne permet pas d'obtenir un rendement suffisant au niveau de la transmission de flux lumineux pour des longueurs d'onde déterminées pour obtenir une résolution ou analyse chromatique suffisamment précise, rendue nécessaire dans le cadre de tirages d'épreuves photographiques en couleur de bonne qualité.

L'invention pallie ces inconvénients. Elle vise un dispositif du type en question qui soit simple à réaliser, fiable, et dans lequel la lumière transmise dans les différentes tranches de longueur d'ondes pour être analysée soit homogène, facile à mesurer et dont la quantité dans les différentes tranches de longueur d'onde soit suffisante pour une quantité de lumière initiale donnée.

Ce dispositif pour séparer un faisceau de lumière blanche en une pluralité de faisceaux élémentaires de couleur déterminée, intégré dans un dispositif d'analyse chromatique pour le tirage de photographies en couleurs, comprend :
- un capteur optique constitué par une ouverture calibrée destinée à recueillir le faisceau lumineux de lumière blanche dirigé, pour le transmettre sur un systéme optique sous forme d'un faisceau ayant un axe optique, émergent dudit capteur optique ;
- une pluralité de capteurs photosensibles, chaque capteur permettant :
   . de recueillir la lumière réfléchie par le systéme optique,
   . puis de convertir en un signal électrique le signal lumineux ainsi reçu
   . et enfin d'amplifier ce signal électrique ;
- un organe de traitement des signaux électriques amplifiés ;
Ce dispositif se caractérise en ce que le système optique est constitué par une pluralité de filtres dichroïques, de couleur complémentaire, parallèles, inclinés sur l'axe optique du faisceau émergent, chaque filtre permettant de réfléchir la quantité de lumière compléntaire à la couleur de ce filtre et de laisser passer la lumière dans les autres couleurs.

En d'autres termes, l'invention consiste tout d'abord à calibrer le faisceau lumineux dirigé de lumière blanche vers un système optique formé de filtres dichroïques complémentaires réfléchissant la lumière dans la couleur complémentaire à leur couleur, puis à transmettre cette bande de longueur d'ondes déterminée sur des capteurs photosensibles convertissant ce signal lumineux en un signal électrique que l'on amplifie et traite de manière appropriée.

Avantageusement, en pratique :
- les filtres dichroïques sont au nombre de trois et sont utilisés comme des semi-miroirs associés chacun à un filtre complémentaire, destiné à éliminer les composantes parasites du faisceau partiel réfléchi et à corriger ce faisceau ;
- le capteur optique est constitué par une fibre optique souple, c'est-à-dire par un faisceau de multifilaments parallèles de verre, dont l'embout forme ouverture calibrée ;
- les miroirs sont inclinés à 45° sur l'axe optique issu du capteur optique ;
- chaque capteur photosensible est constitué par une photodiode, un phototransistor ou analogue et est associé à un amplificateur logarithmique permettant d'obtenir un signal électrique de sortie proportionnel à la densité optique à mesurer ;
- les signaux électriques analogiques donc logarithmiques obtenus sont ensuite convertis dans un signal digital par un convertisseur analogique-digital (A/D) et ces signaux digitaux seront traités par un microprocesseur ;
- dans une première forme de réalisation, le dispositif selon l'invention est destiné à constituer un densitomètre à réflexion. Pour ce faire, le faisceau de lumière blanche est un faisceau lumineux issu d'une source unique de lumière homogène réfléchie sur une épreuve photographique ;
- dans une deuxième forme d'exécution, le dispositif selon l'invention forme un ensemble d'analyse couleur. Pour ce faire, le faisceau de lumière blanche est un faisceau lumineux issu d'une source de lumière blanche homogène transmise directement au capteur optique qui traverse le film négatif à tirer. Dans cette forme de réalisation, avantageusement, le faisceau lumineux de lumière blanche homogène dirigé est préalablement mélangé avant son passage dans le film négatif à tirer, de manière à obtenir en sortie une lumière intense et diffuse et homogène ;
- dans une troisième forme de réalisation avantageuse, le capteur optique est également associé à un ensemble d'analyse de constraste constitué par une seconde pluralité de fibres optiques associées, à l'entrée, à un diaphragme et à la sortie, à une pluralité identique de sous-ensembles photodiodes + amplificateurs et les signaux électriques émis sont ensuite transformés en signaux digitaux par le même convertisseur analogique-digital que précédemment pour être traité par le même ensemble de calcul.

La manière dont l'invention peut être réalisée et les avantages qui en découlent, ressortiront mieux des deux exemples de réalisation qui suivent, donnés à titre indicatif et non limitatif à l'appui des trois figures annexées.

Ces deux exemples de réalisation visent une installation pour le tirage d'épreuves photographiques à partir d'un film négatif.

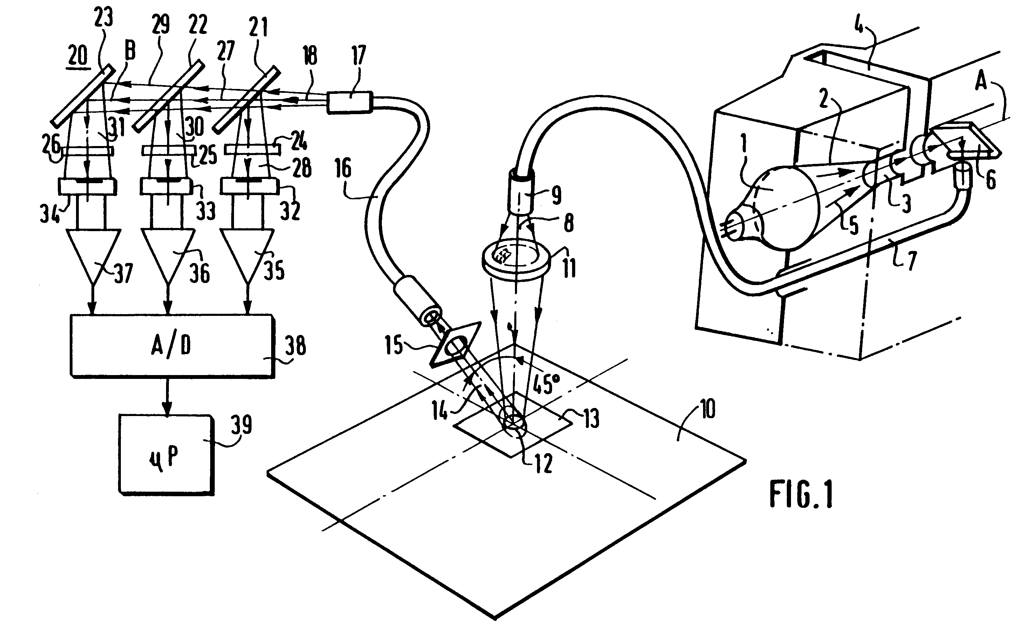

La figure 1 montre en vue perspective sommaire un dispositif selon l'invention dans son application densitomètre en réflexion.

La figure 2 est une représentation en coupe dans l'application analyse couleur et de contraste du film négatif à tirer.

La figure 3 est une vue de face montrant le positionnement des différents organes optiques par rapport au film qui défile.

Une lampe d'exposition (1), par exemple du type halogène, émet un faisceau de lumière (2) dont l'axe optique est représenté par la référence générale (A). Après passage dans un condenseur (3), et un système filtre rotatif dans la fente (4), le faisceau lumineux (5) rencontre un miroir escamotable (6) qui le dévie vers une fibre optique (7) pour l'amener à l'endroit approprié au voisinage de l'épreuve photographique témoin désignée par la référence générale (10). Le faisceau (8) issu de l'embout (9) de la fibre optique (7) est un cône homogène de lumière blanche faiblement divergent. Ce cône traverse alors un condenseur (11) destiné à refocaliser ce cône (8) pour former une tache (12) de petite dimension, éclairée de manière intense. La surface analysée désignée par la référence générale (13) est donc une surface réfléchissante diffusante dans toutes les directions. Pour les besoins de la mesure, on ne capte que la lumière réfléchie (14) à 45° par l'épreuve étalon (10). La lumière réfléchie (14) traverse un premier diaphragme de calibrage (15), puis est transmise par une fibre optique (16) formée d'un faisceau de multifilaments de verre élémentaires parallèles, jusqu'à un endroit approprié pour effectuer la mesure. Le faisceau (18) transmis et à analyser issu de l'embout (17) de la fibre optique (16) a un axe optique symbolisé par la référence générale (B). Ce faisceau (18) est à l'instar de (8) un faisceau homogène de lumière blanche faiblement divergent. Selon une première caractéristique de l'invention, ce faisceau (18) est transmis à un système optique désigné par la référence générale (20) constitué de trois semi-miroirs (21,22,23) inclinés à 45° sur l'axe optique (B), formant filtres dichroïques, respectivement le premier (21) jaune, le second (22) magenta, le troisième (23) cyan. Ces filtres dichroïques (21,22,23) de couleur complémentaire inclinés sur l'axe optique (B) du faisceau émergent (18) sont associés chacun à un filtre complémentaire respectivement (24,25,26) destiné à éliminer les composantes parasites du faisceau partiel réfléchi et à corriger ce faisceau élémentaire. Le filtre jaune (21) laisse passer la lumière jaune (27) (rouge et verte) et réfléchit à 90° la lumière bleue (28) qui traverse ensuite le filtre complémentaire bleu (24) pour éliminer les composantes parasites.

De même, le filtre suivant (22) magenta laisse passer la lumière rouge (29) et réfléchit (30) à 90° la lumière verte, laquelle retraverse le filtre vert (25). De même, le troisième filtre cyan (23) réfléchit à 90° (31) la lumière rouge qui traverse également un filtre rouge (26).

Selon une seconde caractéristique de l'invention, chacun des faisceaux élémentaires réfléchis (28,30,31) est associé à un capteur optique, respectivement (32,33, 34) lui-même associé à un amplificateur (35,36,37). Ces capteurs photosensibles (32-34) constitués par exemple par des photodiodes, phototransistors ou analogues transforment le signal électrique (28,31,32) en un signal électrique et le transforment en signal de sortie proportionnel à la densité à mesurer grâce à l'amplificateur logarithmique (35,36,37). Les signaux électriques analogiques obtenus, donc logarithmiques, sont convertis en un signal digital par un convertisseur analogique digital A/D (38) qui les transmet à un microprocesseur (39) qui les analyse et les exploite.

Ces signaux, logarithmiques, sont directement proportionnels aux densités rouge, verte et bleue à mesurer. Ces signaux sont convertis en densités optiques. Celles-ci sont ensuite comparées aux valeurs de référence qui se trouvent en mémoire, afin d'effectuer les corrections nécessaires.

Dans une deuxième forme d'application, le dispositif selon l'invention est utilisé pour l'analyse couleur et de contraste du film négatif (40) à tirer qui défile. De la même façon, le miroir escamotable (6) transmet le faisceau lumineux homogène dirigé en lumière blanche sur une fibre optique (51) et plus exactement sur un faisceau de fibres optiques parallèles. Le faisceau (52) issu de l'embout (53) traverse un prisme de mélange (54) dont la face de sortie (55) est dépolie et diffusante, de manière à obtenir en sortie une lumière blanche intense, diffuse et homogène. Ce faisceau (56) traverse le film à analyser (40), puis tout d'abord, traverse un diaphragme (57) formé par l'entrée d'un cône (58) d'acquisition associé à l'embout (59) d'une fibre optique (60). A l'instar de (17), l'embout (61) envoie un faisceau émergent (62) transmis à un système optique désigné par la référence générale (63) constitué comme précédemment par trois filtres dichroïques parallèles (64,65,66) respectivement jaune, magenta et cyan, associés à des filtres complémentaires (67,68,69) eux-mêmes à des capteurs photosensibles (70,71,72) et à des amplificateurs logarithmiques (73,74,75) et à un convertisseur analogique digital A/D (76) et un microprocesseur (77), le tout analogue à (21-39).

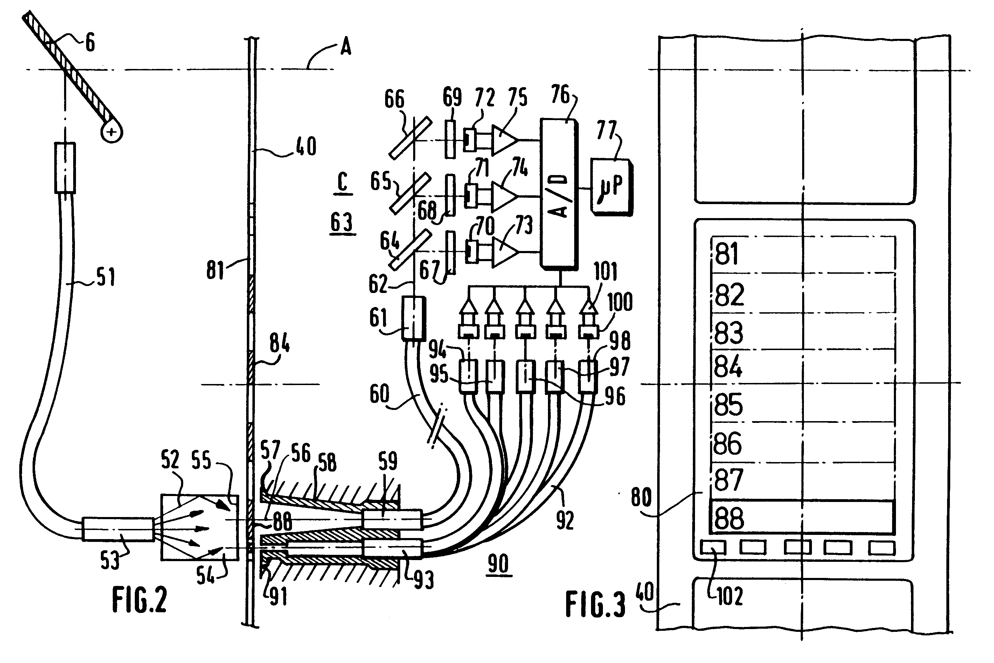

En d'autres termes, dans la version analyse couleur (figure 2), on traite un faisceau (56) transmis, alors que dans la version densitomètre, on traite un faisceau (14) réfléchi.

La vue (80) du film (40) qui défile (figure 3) est divisée en huit tranches horizontales égales référencées (81) à (88) sur les figures 2-3. Ces vues (81,88) défilent devant le capteur optique (57,58,59) dont, dans une forme de réalisation, les dimensions peuvent être de 22 mm x 4 mm. Périodiquement, on mesure les informations transmises par chacune des tranches (81,88), donc la vue (80) qui défile est balayée en permanence et toutes les informations collectées sont transmises au microprocesseur (77). Ce microprocesseur (77) extrait huit fois trois valeurs de densité, respectivement rouge, verte et bleue et calcule la densité générale de la vue (80) en gris, en rouge et en vert, en bleu et ce, grâce à un logiciel approprié. Le microprocesseur (77) détermine ensuite les principaux paramètres de tirage et pilote alors les données d'exposition, notamment de la lampe (1) à travers les filtres du disque de filtrage non représentés mais qui tournent dans la fente (4).

Dans une forme d'exécution perfectionnée, le capteur optique (57,59) est associé à un autre système capteur optique désigné par la référence générale (90) comprenant un premier diaphragme (91) qui transmet une partie du faisceau (56) à un système constitué par cinq fibres optiques (91) dont les embouts (93) d'entrée sont associés à (91) et dont les embouts de sortie respectivement (94,98) sont associés à cinq cellules photosensibles (100) analogues à (70-72) et à (32-34) associées, comme précédemment, à des amplificateurs (101), mais transmettant le signal analogique électrique au convertisseur analogique-digital (76) et de là au microprocesseur (77).

Chacun des embouts (93) lit les informations aux endroits référencés (102) sur la vue (80). Cette disposition d'analyse contraste permet de modifier les paramètres de tirage en fonction des paramètres de contraste des négatifs, et par voie de conséquence de corriger la densité générale du tirage du film (40). Le dispositif selon l'invention présente de nombreux avantages par rapport à ceux commercialisés à ce jour. On peut citer :
- la simplification importante dans la construction du capteur ;
- la possibilité de miniaturiser l'ensemble ;
- la possibilité de convertir le signal lumineux en signal électrique loin du point de mesure, ce qui permet de localiser l'appareillage électronique dans un poste idéal ;
- la possibilité d'éliminer les problèmes liés à la transmission des signaux électriques faibles ;
- la possibilité d'obtenir un bon rendement de transmission des flux lumineux pour chacune des couleurs lors de l'analyse chromatique ;
- enfin la bonne homogénéité de la mesure.

## Revendications

1. Dispositif pour séparer un faisceau de lumièse blanche (14,56) en une pluralité de faisceaux élémentaires de couleur déterminée, intégré dans un dispositif d'analyse chromatique pour le tirage de photographies en couleurs, comprenant :
- un capteur optique (15-17 ; 57-61) constitué par une ouverture calibrée (15,57) destinée à recueillir le faisceau de lumière blanche dirigé (14,56), pour le transmettre sur un système optique (21-23 ; 64-66) sous forme d'un faisceau (18,62) ayant un axe optique (B,C), émergent dudit capteur (17,61) ;
- une pluralité de capteurs photosensibles (24-26 ; 67-69), chaque capteur permettant :
. de recueillir la lumière réfléchie (28,30,31) par le système optique (21-23; 64-66),
. puis de convertir en un signal électrique le signal lumineux ainsi reçu ,
. et enfin de l'amplifier (35-37 ; 73-75) ;
- un organe de traitement (38,76 ; 39,77) des signaux électriques amplifiés ;
caractérisé en ce que le système optique est constitué par une pluralité de filtres dichroïques (21-23 ; 64-66), de couleur complémentaire, parallèles, inclinés sur l'axe optique (B,C) du faisceau émergent (18,62), chaque filtre permettant de réfléchir la quantité de lumière complémentaire à la couleur de ce filtre et de laisser passer la lumière dans les autres couleurs.

2. Dispositif selon la revendication 1, caractérisé en ce que les filtres dichroïques (21-23 ; 64-66) sont au nombre de trois et sont utilisés comme des semimiroirs et sont associés chacun à un filtre complémentaire (24-26 ; 67-69) destiné à éliminer les composantes parasites du faisceau partiel réfléchi (28,30,31) et à corriger ce faisceau.

3. Dispositif selon la revendication 1, caractérisé en ce que le capteur optique est constitué par une fibre optique (16,60,92) souple, dont l'embout (59) forme ouverture calibrée.

4. Dispositif selon la revendication 1, caractérisé en ce que les miroirs (21-23 ; 64-66) sont inclinés à 45° par rapport à l'axe optique (B,C).

5. Dispositif selon l'une des revendications 1 à 4, caractérisé en ce que chaque capteur photosensible (32-34 ; 70-72) est constitué par une photodiode ou un phototransistor et est associé à un amplificateur (35-37 ; 73-75) logarithmique permettant d'obtenir un signal électrique de sortie proportionnel à la densité optique à mesurer.

6. Dispositif selon la revendication 5, caractérisé en ce que les signaux électriques analogiques donc logarithmiques obtenus sont convertis en un signal digital par un convertisseur analogique-digital (A/D) (38,-76) et en ce que ces signaux digitaux sont traités par un microprocesseur (39,77).

7. Dispositif selon la revendication 6, caractérisé en ce qu'il forme densitomètre à réflexion et en ce que le faisceau de lumière blanche (14) est un faisceau lumineux issu d'une source unique (1,8) de lumière homogène réfléchie (12) sur une épreuve photographique (10).

8. Dispositif selon l'une des revendications 1 à 6, caractérisé en ce qu'il forme densitomètre à transmission pour un ensemble d'analyse couleur pour un film (40) négatif à tirer, caractérisé en ce que le faisceau de lumière blanche (52) est un faisceau lumineux issu d'une source unique de lumière (1) blanche, homogène, transmise directement au capteur optique (57).

9. Dispositif selon la revendication 8, caractérisé en ce que le capteur optique est associé à un ensemble d'analyse de constraste constitué par une seconde pluralité de fibres optiques (92) associées, à l'entrée, à un diaphragme (91) et à la sortie, à une pluralité identique de sous-ensembles photodiodes (100) + amplificateurs (101), et en ce que les signaux électriques émis sont transformés en signaux digitaux par le même convertisseur analogique-digital (76)

## Claims

1. A device for separating a beam of white light (14,56) into a plurality of elementary beams of particular color, integrated in a chromatic analyzer, for the printing of color photographs, comprising:
- an optical sensor (15-17; 57-61) consisting of a calibrated aperture (15,57) intended for collecting the directed beam of white light (14,56), in order to transmit it to an optical system (21-23; 64-66) in the form of a beam (18,62) which optical axis (B,C) emerges from the said sensor (17, 61) ;
- a plurality of photosensitive sensors (24-26; 67-69), each sensor making it possible:
. to collect the light (28,30,31) reflected by the optical system (21-23; 64-66),
. then to convert the light signal so received into an electrical signal,
. and finally to amplify it (35-37; 73-75);
- a unit (38,76; 39,77) for processing the amplified electrical signals;
**wherein** the optical system consists of a plurality of dichroic filters (21-23; 64-66) of complementary color which are parallel and which are inclined relative to the optical axis (B,C) of the emerging beam (18,62), each filter making it possible to reflect the quantity of light complementary to the color of this filter and to transmit the light in the other colors.

2. The device as claimed in claim 1, wherein the dichroic filters (21-23; 64-66) are three in number, are used as half-mirrors and are each associated with a complementary filter (24-26; 67-69) intended for eliminating the spurious components of the reflected part beam (28,30,31) and for correcting this beam.

3. The device as claimed in claim 1, wherein the optical sensor consists of a flexible optical fiber (16,60,92), the endpiece (59) of which forms a calibrated aperture.

4. The device as claimed in claim 1, wherein the mirrors (21-23; 64-66) are inclined at 45° relative to the optical axis (B,C).

5. The device as claimed in one of claims 1 to 4, wherein each photosensitive sensor (32-34; 70-72) consists of a photodiode or a phototransistor and is associated with a logarithmic amplifier (35-37; 73-75) making it possible to obtain an electrical output signal proportional to the optical density to be measured.

6. The device as claimed in claim 5, wherein the analog, hence logarithmic electrical signals obtained are converted into a digital signal by means of an analog/digital (A/D) converter (38,76), and wherein these digital signals are processed by a microprocessor (39, 77).

7. The device as claimed in claim 6, defined in that it constitutes a reflection densitometer, and wherein the beam of white light (14) is a light beam obtained from a single source (1,8) of uniform light (12) reflected on a photographic proof (10).

8. The device as claimed in one of claims 1 to 6, defined in that it constitutes a transmission densitometer for a color analysis assembly for a negative film (40) to be printed, wherein the beam of white light (52) is a light beam obtained from a single source (1) of uniform white light transmitted directly to the optical sensor (57).

9. The device as claimed in claim 8, wherein the optical sensor is associated with a contrast analysis assembly consisting of a second plurality of optical fibers (92) associated at the entrance with a diaphragm (91) and at the exit with an identical plurality of photodiode (100)/amplifier (101) subassemblies, and wherein the electrical signals emitted are converted into digital signals by means of the same analog/digital converter (76).

## Patentansprüche

1. Vorrichtung zum Aufteilen eines weißen Lichtstrahls (14, 56) in mehrere Elementarstrahlen mit vorbestimmten Farben, die in eine Vorrichtung zur Farbanalyse für das Abziehen von Farbphotographien integriert ist, mit:
- einem optischen Aufnehmer (15-17; 57-61), der durch eine kalibrierte Öffnung (15, 57) zur Aufnahme des gerichteten (14, 56) Bündels aus weißem Licht gebildet wird, um diesen in Form eines Bühdels (18, 62) einem optischen System (21-23; 64-66) zuzuleiten, dessen optische Achse (B, C) aus dem Aufnehmer (17, 61) austritt;
- mehreren photoempfindlichen Aufnehmern (24-26; 67-69), von denen jeder es ermöglicht:
-- das von dem optischen System (21-23; 64-66) reflektierte Licht (28, 30, 31) aufzunehmen,
-- das derart empfangene Lichtsignal in ein elektrisches Signal umzuwandeln,
-- und dieses schließlich zu verstärken (35-37; 73-75);
- einem Organ (30, 76; 39, 77) zum Verarbeiten der verstärkten elektrischen Signale;
dadurch gekennzeichnet, daß das optische System durch mehrere dichroitische Filter (21-23; 64-66) von komplementärer Farbe gebildet wird, die parallel und zur optischen Achse (B, C) des Austrittsbündels (18, 62) geneigt angeordnet sind, wobei jedes Filter es gestattet, die zu der Farbe des jeweiligen Filters komplementäre Lichtmenge zu reflektieren und das Licht von anderer Farbe durchzulassen.

2. Vorrichtung nach Anspruch 1, dadurch gekennzeichnet, daß drei dichroitische Filter (21-23; 64-66) vorgesehen sind, die als halbdurchlässige Spiegel verwendet werden und jeweils einem komplementären Filter (24-26; 67-69) zugeordnet sind, das zum Eliminieren parasitärer Komponenten des teilweise reflektierten Bündels (28, 30, 31) und zur Korrektur des Bündels dient.

3. Vorrichtung nach Anspruch 1, dadurch gekennzeichnet, daß der optische Aufnehmer durch eine flexible Lichtleitfaser (16, 60, 92) gebildet wird, deren Anschluß (59) eine kalibrierte Öffnung bildet.

4. Vorrichtung nach Anspruch 1, dadurch gekennzeichnet, daß die Spiegel (21-23; 64-66) um 45° zur optischen Achse (B, C) geneigt sind.

5. Vorrichtung nach einem der Ansprüche 1 bis 4, dadurch gekennzeichnet, daß jeder photosensible Aufnehmer (32-34; 70-72) durch eine Photodiode oder einen Phototransistor gebildet wird und einem logarithmischen Verstärker (35-37; 73-75) zugeordnet ist, der es gestattet, ein elektrisches Ausgangssignal proportional zu der zu messenden optischen Dichte zu erhalten.

6. Vorrichtung nach Anspruch 5, dadurch gekennzeichnet, daß die erhaltenen elektrischen und logarithmischen analogen Signale mittels eines Analog-Digital-Wandlers (38; 76) in ein digitales Signal umgewandelt werden, und daß die digitalen Signale in einem Mikroprozessor (39, 77) verarbeitet werden.

7. Vorrichtung nach Anspruch 6, dadurch gekennzeichnet, daß sie ein Reflexions-Densitometer bildet und daß das Bündel (14) von weißem Licht ein Lichtbündel ist, das von einer einzigen Quelle (1, 8) homogenen, reflektierten Lichtes (12) auf einen photographischen Abzug (10) ausgesandt wird.

8. Vorrichtung nach einem der Ansprüche 1 bis 6, dadurch gekennzeichnet, daß sie als Transmissions-Densitometer für eine Anordnung zur Analyse der Farbe von abzuziehenden Negativfilmen (40) dient, dadurch gekennzeichnet, daß das Bündel (52) von weißem Licht ein Lichtbündel ist, das von einer einzigen Quelle (1) weißen, homogenen Lichtes arnsgesandt und direkt auf den optischen Aufnehmer (57) übertragen wird.

9. Vorrichtung nach Anspruch 8, dadurch gekennzeichnet, daß der optische Aufnehmer einer Anordnung zur Analyse des Kontrastes zugeordnet ist, die durch eine zweite Mehrheit von Lichtleitfasern (92) gebildet wird, die eingangsseitig einer Blende (91) und ausgangsseitig einer Mehrzahl identischer Unter-Anordnungen von Photodioden (100) + Verstärkern (101) zugeordnet sind, und daß die abgegebenen elektrischen Signale mittels desselben Analog-Digital-Wandlers (76) in digitale Signale umgewandelt werden.
